# EUROPEAN PATENT SPECIFICATION

(11) **EP 0 514 463 B1**
(45) Date of publication and mention of the grant of the patent: **07.12.1994**
(21) Application number: 91904410.7
(22) Date of filing: 05.02.1991
(51) Int. Cl.: B23K 9/16

(54) **WELD SHROUD**
SCHWEISSHÜLLE
ECRAN DE SOUDEUR

(30) Priority: 05.02.1990 GB 9002480
(43) Date of publication of application: 25.11.1992
(73) Proprietor: RAMSTUD AUST PTY LTD, Cottesloe, W.A. (AU)
(72) Inventor: BLAKEMORE, Gordon, Robert, Aberdeen AB4 0XY (GB)
(74) Representative: Skone James, Robert Edmund
(86) International application number: GB9100173
(87) International publication number: WO9111286

(56) References cited:
- AT-B- 347 206
- US-A- 3 125 666
- PATENT ABSTRACTS OF JAPAN, vol. 4, no. 105 (M-23)(587) 26 July 1980, & JP-A-55 64975 (MITSUBISHI DENKI K.K.) 16 May 1980
- PATENT ABSTRACTS OF JAPAN; vol. 10, no. 299 (M-524)(2355) 11 October 1986, & JP-A-61 111780 (MITSUBISHI HEAVY IND LTD) 29 May 1986

## Description

This application relates to welding, in particular to welds made in a hazardous environment such as in working chemical plant or oil rigs.

Traditionally the danger of explosion during welding in chemical plant or zoned areas of oil rigs means that whenever it is necessary to carry out welding in those areas the plant or the zoned area has to be shut down. This is expensive in terms of lost production time and in some cases start up and shut down can be more prone to danger than keeping the systems running.

JP-A-55-64975 describes a welding torch for welding in low pressure gas in which an inner chamber surrounding a weld electrode is filled with an inert gas.

AT-B-347206 describes a method of welding in which a chamber surrounds a weld electrode positioned over a workpiece and a wire of additional material is supplied to an upper surface of the workpiece at an angle of at least 30° to the workpiece.

In accordance with one aspect of the present invention, a method of welding workpieces in a hazardous environment comprises surrounding the vicinity of the weld region with a buffer zone containing a fluid which is inert relative to the environment so as to shield the weld region from the environment, characterised in that an inner casing including a layer of foam is provided to separate the weld region from the fluid in the buffer zone.

Typically water or an inert gas is caused to flow through the buffer zone although a static arrangement is also possible in some circumstances.

In accordance with a second aspect of the present invention a weld shield assembly comprises, a shroud for surrounding the vicinity of a weld region of workpieces to be welded, the shroud having an opening to permit a weld tool to be connected to one of the workpieces, and being shaped so as to retain a fluid which is inert relative to the surrounding environment, whereby the fluid shields the weld region in use from the environment, characterised in that an inner casing including a layer of foam is provided to separate the weld region from the fluid in the buffer zone.

Typically the fluid is an inert gas or water.

Preferably the apparatus includes a seal for sealing the shroud to the weld tool to retain fluid in the shroud.

Preferably, the inner casing comprises an inner shield and the foam layer.

The inner shield of the inner casing which surrounds the weld region may be independent from the shroud but preferably is an integral part of the shroud.

The layer of foam included in the inner casing enhances the quality of the weld and separates the weld region from the fluid. Where there are dangerous gases, liquids or powders present the cavity formed between the shroud and the casing isolates the weld area, this isolation being improved by a flow of water or inert gas between fluid input and output apertures provided through the shroud.

The weld shield assembly can be made of rigid metal or plastics materials or more flexible plastics materials chosen for the ability to withstand the temperatures they will be subjected to (typically up to 1100°C). A combination of materials for the separate areas would be possible or else a rigid outer structure can be sealed to the weld surface by flexible joints, this would be more likely where the inner casing is an integral part of the shield assembly.

The method and apparatus described above are suitable for any type of welding including arc welding, friction welding and flame welding.

Some examples of shield assemblies and methods according to the present invention will now be described with reference to the accompanying drawings, in which:-
Figure 1 is a cross-section through one example of a shield assembly in which the inner casing is an integral part of the shroud;
Figure 2 illustrates a modification of the Figure 1 example; and,
Figure 3 is a cross-section through another example of a shield assembly in which the inner casing is independent from the shroud.

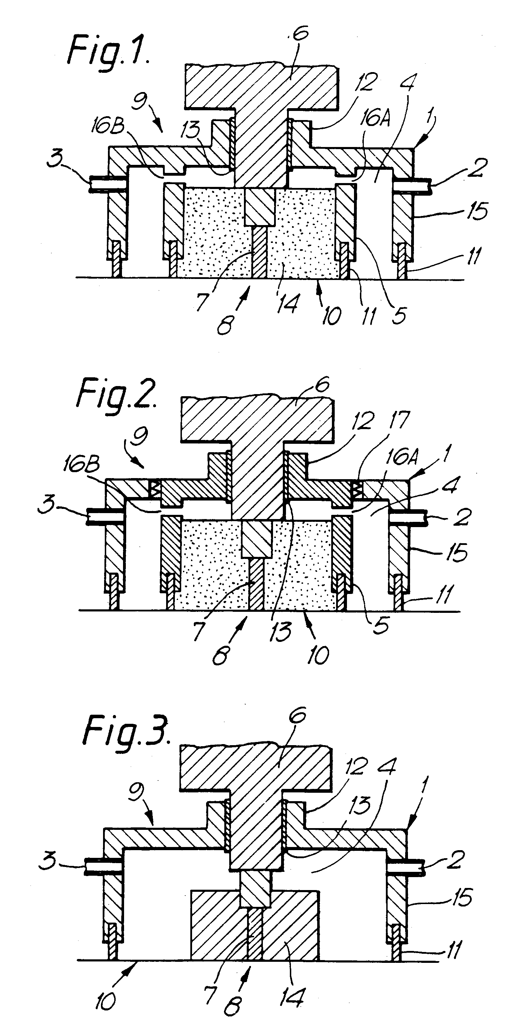

The shield assembly 9 shown in Figure 1 has a circular upper part 1 and depending cylindrical skirt 15 defining a shroud and made of aluminium, steel, stainless steel or the like provided with an input aperture 2 and output aperture 3 for an inert fluid. An inner casing 5 is integrally formed as an integral part of the shroud and makes contact with the weld surface 10 of a workpiece via flexible seal 11 similar to that by which the depending skirt 15 contacts the weld surface 10.

A cavity 4 is formed between the inner casing 5 and outer portions 1, 15 of the shroud defining a buffer zone. The inner casing 5 keeps the weld region 8 separate from the area of danger and helps to prevent the escape from the weld area 8 into the area of danger of heat, sparks or ultraviolet radiation while the fluid flow through the cavity removes heat.

A cylindrical neck 12 on the upper part 1 provides an opening for a weld tool 6 through which it can bring a workpiece 7 into contact with the weld region 8. There is a seal 13 provided between the neck 12 and the weld tool 6 to prevent flow of fluids between their surfaces or the egress of heat or sparks to the area containing dangerous materials.

A block of closed-cell EVA type foam 14 is provided in the inner casing 5 to prevent the fluid reaching the weld region 8 while inlet and outlet apertures 16A, 16B are provided in the wall of the casing 5 to enable fluid to be present on top of the foam.

In use, the shield assembly 9 is positioned over the region to be welded 8 without the weld tool 6, the weld tool 6 only being inserted through the neck 12 when the shield assembly 9 is fixed in position. Alternatively the shield assembly 9 can be fixed onto the weld tool 6 and then the complete assembly positioned as required for a weld. An inert fluid such as water, nitrogen, argon or carbon dioxide is then caused to flow through the shroud and inner casing 5 (by means not shown) while welding takes place.

Figure 2 shows a shield assembly similar to Figure 1 but with the inner casing 5 separate from the shroud. In this case the casing 5 is sealed to the shroud by a seal 17 and is mounted directly to the weld tool 6.

Figure 3 shows a further example of a shield assembly 9. In this case the inner casing is omitted and the cavity 4 defined by the shroud and the foam 14.

## Claims

1. A method of welding workpieces in a hazardous environment comprising surrounding the vicinity of the weld region (8) with a buffer zone (4) containing a fluid which is inert relative to the environment so as to shield the weld region (8) from the environment, characterised in that an inner casing (5) including a layer of foam (14) is provided to separate the weld region from the fluid in the buffer zone (4).

2. A method of welding workpieces according to claim 1 comprising surrounding the weld region (8) with an inert gas.

3. A method of welding workpieces according to claim 1 or claim 2, further comprising causing fluid to flow past the weld area continuously.

4. A weld shield assembly comprising a shroud for surrounding the vicinity of a weld region (8) of workpieces to be welded, the shroud (1,15) having an opening (12) to permit a weld tool (6) to be connected to one of the workpieces, and being shaped so as to retain a fluid which is inert relative to the surrounding environment, whereby the fluid shields the weld region (8) in use from the environment, characterised in that an inner casing (5) including a layer of foam (14) is provided to separate the weld region (8) from the fluid in the buffer zone (4).

5. A weld shield assembly according to claim 4, in which the fluid is an inert gas.

6. A weld shield assembly according to claim 4 or claim 5, in which there are fluid input (2) and output (3) means and means to provide a constant flow of fluid past the weld area (8).

7. A weld shield assembly according to any of claims 4-6, wherein the inner casing (5)comprises an inner shield (5,11) and the foam layer (14).

8. A weld shield assembly according to claim 7, in which the inner shield of the inner casing (5) is an integral part of the shroud (1,15).

## Patentansprüche

1. Verfahren zum Schweißen von Werkstücken in explosionsgefährdenden Gegenden, bei welchem die nähere Umgebung der Schweißzone (8) von einer Pufferzone (4) umschlossen wird, welche eine Flüssigkeit enthält, die eine schützende Wirkung derart auf das Umfeld ausübt, daß sie die Schweißzone (8) von dem Umfeld gänzlich abschirmt, dadurch gekennzeichnet, daß eine innere, mit einer Schaumschicht (14) versehene Ummantelung (5) vorgesehen ist, um die Schweißzone von der sich in der Pufferzone (4) befindlichen Flüssigkeit zu trennen.

2. Verfahren zum Schweißen von Werkstücken nach Anspruch 1, bei welchem die Schweißzone (8) von einem Schutzgas umgeben ist.

3. Verfahren zum Schweißen von Werkstücken nach Anspruch 1 oder 2, bei welchem ferner die Flüssigkeit laufend über die Schweißzone hinaus fließt.

4. Schweißschutzeinrichtung mit einem Schirmblech, welches dazu dient, die nähere Umgebung einer Schweißzone (8) von zu schweißenden Werkstücken zu umschließen, wobei das Schirmblech (1, 15) eine Öffnung (12) zum Anschluß eines Schweißgerätes (6) an eines der Werkstücke aufweist und so ausgebildet ist, daß es die Flüssigkeit, welche auf das Umfeld eine schützende Wirkung ausübt, zurückhält,wodurch die Flüssigkeit die betreffende Schweißzone (8) von dem Umfeld abschirmt, dadurch gekennzeichnet, daß eine, mit einer Schaumschicht (14) versehene, innere Ummantelung (5) vorgesehen ist, um die Schweißzone (8) von der Flüssigkeit in der Pufferzone (4) zu trennen.

5. Schweißschutzeinrichtung nach Anspruch 4, bei welcher die Flüssigkeit ein Schutzgas ist.

6. Schweißschutzeinrichtung nach Anspruch 4 oder 5, bei welcher ein Flüssigkeitszulauf (2) und Flüssigkeitsablauf (3) sowie eine, einen konstanten Flüssigkeitsfluß über die Schweißzone (8) hinaus ermöglichende Vorrichtung vorgesehen ist.

7. Schweißschutzeinrichtung nach einem der Ansprüche 4-6, bei welcher die innere Ummantelung (5) eine innere Abschirmung (5, 11) und die Schaumschicht (14) aufweist.

8. Schweißschutzeinrichtung nach Anspruch 7, bei welcher die innere Abschirmung der inneren Ummantelung (5) ein integraler Bestandteil des Schirmbleches (1, 15) ist.

## Revendications

1. Procédé de soudage de pièces d'oeuvre dans un environnement dangereux, comportant l'opération consistant à entourer le voisinage de la région de soudage (8) par une zone tampon (4) contenant un fluide qui est inerte vis-à-vis de l'environnement, de manière à protéger la région de soudage (8) de l'environnement, caractérisé en ce qu'un caisson intérieur (5) comportant une couche de mousse (14) est prévu pour séparer la région de soudage du fluide de la zone tampon (4).

2. Procédé de soudage de pièces d'oeuvre selon la revendication 1, comportant l'opération consistant à entourer la région de soudage (8) par un gaz inerte.

3. Procédé de soudage de pièces d'oeuvre selon la revendication 1 ou la revendication 2, comportant l'opération consistant à faire s'écouler le fluide en continu à travers la région de soudage.

4. Système de protection de soudage comportant une enveloppe de protection pour entourer le voisinage d'une région de soudage (8) de pièces d'oeuvre à souder, l'enveloppe de protection (1, 15) ayant une ouverture (12) pour permettre de relier un outil de soudage (6) à une des pièces d'oeuvre, et étant configurée de manière à retenir un fluide qui est inerte vis-à-vis de l'environnement, grâce à quoi, en fonctionnement, le fluide protège de l'environnement la région de soudage (8), caractérisé en ce qu'un caisson intérieur (5), comportant une couche de mousse (14), est prévu pour séparer la région de soudage (8) du fluide de la zone tampon (4).

5. Système de protection de soudage selon la revendication 4, dans lequel le fluide est un gaz inerte.

6. Système de protection de soudage selon la revendication 4 ou la revendication 5, dans lequel il existe des moyens d'entrée (2) et de sortie (3) de fluide, et des moyens pour fournir un écoulement constant de fluide à travers la région de soudage (8).

7. Système de protection de soudage selon l'une quelconque des revendications 4-6, dans lequel le caisson intérieur (5) comporte un bouclier intérieur (5, 11) et la couche de mousse (14).

8. Système de protection de soudage selon la revendication 7, dans lequel le bouclier intérieur du caisson intérieur (5) fait partie intégrante de l'enveloppe de protection (1, 15).
